# EUROPEAN PATENT APPLICATION

(11) **EP 1 437 332 A1**
(43) Date of publication of application: **14.07.2004**
(21) Application number: 02800531.2
(22) Date of filing: 09.09.2002
(51) Int. Cl.: C04B 33/14, C04B 35/00

(54) **THREE-DIMENSIONAL COLOUR PATTERN SLABS WHICH FORMED BY SINTERING CERAMIC POWDER**

(30) Priority: 10.09.2001 CN 01127837
(71) Applicant: Yang, Dening, Shenzhen, Guangdong 518053 (CN)
(72) Inventor: Yang, Dening, Shenzhen, Guangdong 518053 (CN)
(74) Representative: Jackson, Derek Charles
(86) International application number: PCT/CN2002/000632
(87) International publication number: WO 2003/031369

(57) **Abstract**

This invention relates to the three-dimensional color pattern slabs that comprises colorized ceramic powder which diameter within at least of 0.1 mm-0.8mm, formed by press and sintering. The products have clear-cut ceramic pattern blocks formed by different colors or one color identical but different from shade or diversified compound color. There are at least two pattern blocks with each area accounting for 10%-90% of the total area of the product, and each color block has at least one powder color accounting for 80%-100% of the block area and evenly distributed in 70%-100% of the product thickness from surface layer to base; Among color patterns of these two color areas and within 1-20mm intersectant region, the different color powders of adjacent different color pattern blocks are proportionally mixed up between 1:50 and 50:50. It may produce the material imitating natural stone in three-dimension, and with the virtue in lower water absorption, lower color aberration in large-area laying, excellent smooth finish and the absence of radio element.

## Description

### Field of the Invention

This invention involves imitative slab material used in decorative ceramic construction work, and especially the three-dimensional color pattern slabs formed by sintering ceramic powder, which is suitable for the ever during decoration of floor, wall face and furniture panels. To produce the foresaid products, ceramic color powder is adopted and is undergoing process such as press and sintering. The final product has clear-cut ceramic pattern block formed by different colors or one color identical but different from shade or diversified compound color. This pattern block is of even distribution extending from the product surface to 70%-100% of bottom thickness. Comparing with the imitation of natural stone presently available, the three-dimensional imitative stone material further embodies the patterning of natural stones and it is endowed with advantages such as lower water absorption, lower color aberration, smooth finish, and zero radioactivity etc. Owing to these features, the three-dimensional imitation of natural stone has become a new trend of practicability and evolutionarity, which is widely accepted and promoted by business circles.

### Background of the Invention

With the development of technology and the growth in living standard, we hope to have floor and wall decoration material possessing appearance of natural stones, the granitic pattern for example, to achieve the top-grade effect.

The industry wherefore has always been updating the structure of decorative slabs of natural stone imitation. Holding several invention patents of decorative slabs both abroad and home, the inventor has brought up a technical patent of three-dimensional ceramic granite and marble (issue No. W097/36840, published in Oct.9^{th}, 1997). The imitation of stone material made up under the technology has clear-cut patterns on its surface. Besides, these patterns will not be transformed when undergoing surface treating. In that case, monolithic construction will be upgraded to optimize the steadiness in application. However, the imitation of stone material described here is far from satisfaction due to its still unnatural (in vertical) boundary transition of color patterns comparing with real stones.
To meet the demand of practicability, the inventor presented "Ceramic Imitation of Granitic Slab and Its Manufacturing Method" (issue No. W099/28262, 1999, published in Jun.10^{th} 1999).
Although the foresaid presentation is more practical and advanced to users, the final product yet has imperfect structure. The product made under this technology will only has surface patterns instead of dimensional patterns and consequently it won't be able to truthfully image the realistic feel of natural granite pattern inside out, especially in the lower part of the edge side. In the event of table top decoration or the architectural ornament of the fringe exposed of wall or pillar, the edges of the product must be ground and finished. Without uniform grain patterns extending from inside to the outside, the imitation, comparing with natural stones, lacks of the sense of reality and completeness in practical application.

The natural stone imitation made under the technology now available has random three-dimensional patterns distributed from surface to interior. These patterns are unable to form the same stable and uniform color patterns as natural stone. Consequently the imitation lacks of the sense of reality.

To Summarize the aforementioned, the nature stone imitation made under the technology now available lacks of the sense of reality due to its incapability of presenting the patterns of natural granite formed by color grains in different or identical color(s) but different density. In this way, the aforesaid imitation of natural stones remains a good many of defects for future further improvement.

To eliminate the defects, manufacturers involved have gone all out to seek for the solution. An accomplished and applicable design will become an all-important issue to be solved.

In view of the foresaid defects, the inventor, making good use of his practical experience in the product design as well as manufacturing and professional knowledge, has been trying to create a new type of three-dimensional color pattern slabs formed by sintering ceramic powder in order to improve structure of natural stone imitation now available in the market. Through unceasing research and repeated sample verification and improvement, the inventor eventually presented the invention with practical value.

### Description of the Invention

The invention aims at surmounting the defects of natural stone imitation now available and providing a new type of three-dimensional color pattern slabs formed by sintering ceramic powder. The major technical issue is how to produce three-dimensional slabs imitating natural stones, or a kind of material went by the name of clone natural stone. In the internal three-dimensional space of the new product, the density and location of partial distribution of colorized inorganic silicate material can be regularly processed according to the characteristics of the natural stone pattern and is endowed with the excellent virtue of natural stones.
The secondary purpose of the invention is to provide a kind of three-dimensional color pattern slabs formed by sintering ceramic powder. That is to achieve the advantages of natural stones via even density distribution of controlled three-dimensional color powder granules, thereby provides better practicability and the utility value in the industry.

Another purpose of the invention is to provide a kind of three-dimensional color pattern slabs formed by sintering ceramic powder. That is to produce a kind of product, comparing with natural stones, having advantages such as lower water absorption, lower color aberration in large-area laying, smooth finish, standard dimension and being free of radio elements like radon gas etc.

The purpose of the invention and major technical issue to be solved will be accomplished through following technical proposal. This invention brings up three-dimensional color pattern slabs that comprises colorized ceramic powder which diameter within at least of 0.1mm-0.8mm, formed by press and sintering. The final products have clear-cut ceramic pattern blocks formed by different colors or one color identical but different from shade or diversified compound color. There are at least two pattern blocks with each area accounting for 10%-90% of the total area of the product, and each color block has at least one powder color accounting for 80%-100% of the block area and evenly distributed in 70%-100% of the product thickness from surface layer to base;In addition, among color patterns of these two color areas and within 1-20mm intersectant region, the different color powders of adjacent different color pattern blocks are proportionally mixed up between 1:50 and 50:50.

The purpose of the invention and major technical issue to be solved may be further accomplished through following technical proposal.

In the foresaid three-dimensional color pattern slab, there are at least two pattern blocks with each area accounting for 10%-90% of the total area of the product, and each color block has at least one powder color accounting for 85%-100% of the block area and evenly distributed in 80%-100% of the product thickness from surface layer to base;

In addition, among color patterns of these two color areas and within 1-20mm intersectant region, the different color powders of adjacent different color pattern blocks are proportionally mixed up between 1:50 and 50:50.In the intersectant region, there is 50-100% of separate color grains having min. diameter of 0.1mm-0.8mm.

Besides, among color patterns of these two color areas and within 1-50mm intersectant region, the different color powders of adjacent different color pattern blocks are proportionally mixed up between 1:50 and 50:50.

The abovementioned pattern blocks contain 1-5 types of grains in 1.5mm- 20mm diameters that cover 2%-80% of the block.

The three-dimensional color pattern slab has clear-cut pattern blocks formed by 2-10 different colors or an identical color but different from shade or diversified compound color. Covering 90%.-100% of product thickness, three-dimensional space from the surface layer to bottom has biscuit-shape pattern formed by 1-5 types of ceramic color powders in 3mm-60mm diameters.

The color area in the three-dimensional color pattern slab may present single color such as red, yellow, white, blue, black, green, purple and brown etc. or the mixture of two or a great variety of color grains as well as the compound of mixed color and single color.

The product surface can be polished or non-polished.

On the product surface, there is also better there-dimensional patterning formed by concave and convex anti-skid patterns in the depth of 0.1mm-5mm.The surface of the convex pattern can be polished or non-polished.

The shape of foresaid silicate color area can be made into geometric structures such as plane, cylinder and camber, partially cylindrical form, sphericity, multi-pyramid, round, bar or square.

The invention possesses utility advantage as compared with technology now available. According to the above technical proposal, the three-dimensional color pattern slab form by sintering ceramic powder described in the invention is totally free of defects lying in the imitation of natural stone decoration material now available. In addition, It presents certain practicability and value of comprehensive utility, since the product structure is more stable and diversified. The advantages of the invention are specified as follows:
1. In the foresaid three-dimensional color pattern slab formed by sintering ceramic powder, there are at least two pattern blocks with each area accounting for 10%-90% of the total area of the product, and each color block has at least one powder color accounting for 80%-100% of the block area and evenly distributed in 70%-100% of the product thickness from surface layer to base; In addition, among color patterns of these two color areas and within 1-20mm intersectant region, the different color powders of adjacent different color pattern blocks are proportionally mixed up between 1:50 and 50:50.The invention leads to the production of three-dimensional slabs imitating natural stones, or a kind of material went by the name of clone natural stone. In the internal three-dimensional space of the product, the density and location of partial distribution of colorized inorganic silicate material can be regularly processed according to the structures of the natural stone pattern and is endowed with the excellent virtue of natural stones.
2. The product under this invention possesses the virtue of imitative natural stone and certain practicability by means of evenly distributed color powder grains in controlled three-dimensional space.
3. This invention makes structural improvement to the decorative imitation of natural stone. Simpler structure leads to lower cost of manufacture. The virtue and practicability in use are more outstanding, let alone utility value in the industry.
4. The product under this invention, comparing with natural stones, having advantages such as lower water absorption, lower color aberration in large-area laying, smooth finish, standard dimension and being free of radio elements like radon gas etc. In addition, the product, further satisfying users' demand on imitations of natural stone, is more practical and environment-friendly.
5. The invention indeed realizes the practicality in use and the simpler processing of product structure is cost-benefit. Its utility value in the industry is worthy of widely promoting.
6. The physical design, practicability and cost effectiveness of this invention indeed conform to the demand of industrial development. Meanwhile, as an innovative design, the structure described in the invention has never been found in any publication. There is no similar product prevailing in the market and there is no similar physical design released or used in like products.
7. The structure of this invention actually exceeds the decorative imitations of natural stone available in technical respect. Besides, its unique structural feature and function are far superior to imitations of natural stone available, let alone its ingenuity, a good many of virtues and technical advancement.
8. The applicant of this patent-the developer of imitative natural stone material-has rich experience in the development of the foresaid product and knows well the issues and defects existing in the structure of natural stone imitations available. The invention is the result of the research and development on the foresaid defects. Its originality in space structure and certain enhancement as compared with decorative slabs available have indeed endowed the final product with excellent virtues and practicability.

In sum, the imitation of stone made of three-dimensional color pattern slab of special construction formed by sintering ceramic powder performs almost the same as natural stones and further presents the pattern characteristics of natural stones as compared with every kind of natural stone imitation such as artificial stones or ceramic tiles etc. At the meantime, the product under this invention exceeds natural stones with lower water absorption, lower color aberration in large-area laying, smooth finish, standard dimension, and being free of radio elements like radon gas. The foresaid a good many of advantages, for example the use value and original space structure, structural and functional improvement, technical advancement and the utility value in the industry, have characterized this novel and practical design.
Please refer to the following examples and attached drawings for specific construction of this invention.

### Brief Description of The Drawings

Fig.1 is a schematic perspective representation of a three-dimensional color pattern slabs formed by sintering ceramic powder according to one embodiment of the invention.
Fig.2 is a schematic representation of partial interface enlarged of different color blocks in a three-dimensional color pattern slabs formed by sintering ceramic powder according to one embodiment of the invention.
Fig.3 is a schematic representation of partial vertical section enlarged of color blocks interface in a three-dimensional color pattern slabs formed by sintering ceramic powder according to one embodiment of the invention.
Fig.4 is a schematic perspective representation of steel mould (opening) of a three-dimensional color pattern slabs formed by sintering ceramic powder according to one embodiment of the invention.

### The Best Way to Fulfill the Invention

Combining the attached drawings and preferred embodiment of the invention, the following text has brought up detailed description on the fabrication method, structure, characteristics and virtues of three-dimensional color pattern slab formed sintering ceramic powder.

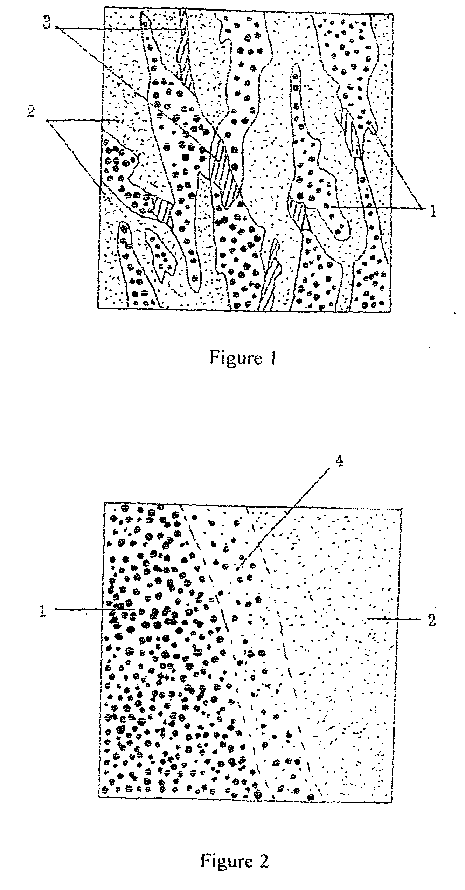

Please refer to Fig.1 for a schematic perspective representation terra a three-dimensional color pattern slabs formed by sintering ceramic powder according to one embodiment of the invention. The pattern block formed by big black spots is the brick red section 1 of ceramic material, while the small black spots form the white section 2. The block marked with sloping lines is the grey-black section 3 of the ceramic material.

Please refer to Fig.2 for a schematic representation of partial interface enlarged of different color blocks in a three-dimensional color pattern slabs formed by sintering ceramic powder according to one embodiment of the invention. Big black spots form the brick red section 1 of ceramic material and small black spots represent the white section 2. The part between two dotted lines shows that the brick red powder in section 1 naturally and reciprocally mix up with white powder in section 2 to form a transition zone 4 proportioned according to 10:50-30:50.

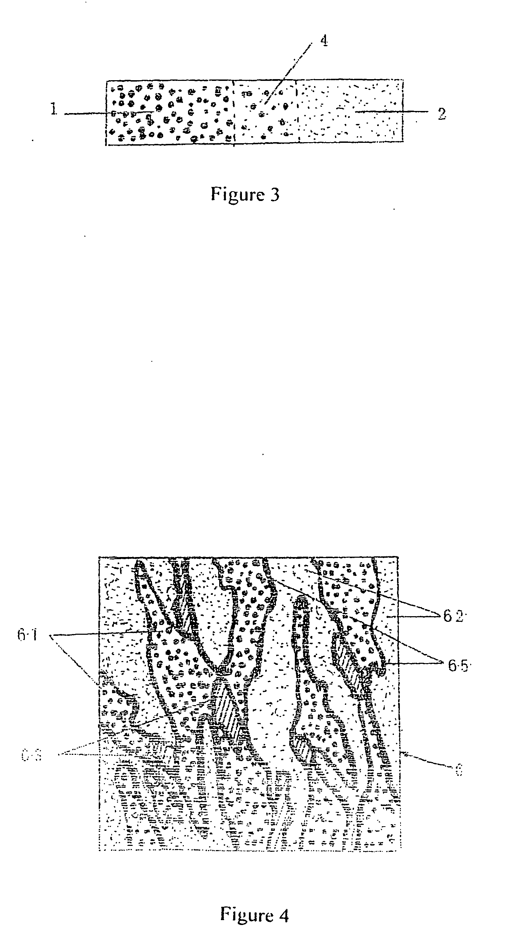

Please refer to Fig.3 for a schematic representation of partial vertical section enlarged of different color blocks in a three-dimensional color pattern slabs formed by sintering ceramic powder according to one embodiment of the invention. Big black spots form the brick red section 1 of ceramic material and small black spots form the white section 2. The part between two dotted lines shows that the brick red powder in section 1 naturally mix up with white powder in section 2 to form a transition zone 4 proportioned according to 10:50-30:50.

Please refer to Fig.4 for a schematic perspective representation of steel mould (opening) of a three-dimensional color pattern slabs formed by sintering ceramic powder according to one embodiment of the invention. Big black spots are the mould opening 61 for brick red powder passage, while small black spots is the mould opening 62 for white powder passage. The diagonal part represents the gray-black powder passage section 63 and thick black lines show the head-down position of steel mould opening plane 65.

Referring to Fig.1-Fig.4, The three-dimensional color pattern slabs formed by sintering ceramic powder of the invention, The structure which diameter within at least of 0.1mm-0.8mm, formed by press and sintering, with the features as: The products have clear-cut ceramic pattern blocks formed by different colors or one color identical but different from shade or diversified compound color. There are at least two pattern blocks with each area accounting for 10%-90% of the total area of the product, and each color block has at least one powder color accounting for 80%-100% of the block area and evenly distributed in 70%-100% of the product thickness from surface layer to base;In addition, among color patterns of these two color areas and within 1-20mm intersectant region, the different color powders of adjacent different color pattern blocks are proportionally mixed up between 1:50 and 50:50.

To make the products under the invention, The three-dimensional color pattern slabs formed by sintering ceramic powder, In the foresaid three-dimensional color pattern slab, there are at least two pattern blocks with each area accounting for 10%-90% of the total area of the product, and each color block has at least one powder color accounting for 85%-100% of the block area and evenly distributed in 80%-100% of the product thickness from surface layer to base;

To make the products under the invention, The three-dimensional color pattern slabs formed by sintering ceramic powder, In addition, among color patterns of these two color areas and within 1-20mm intersectant region, the different color powders of adjacent different color pattern blocks are proportionally mixed up between 1:50 and 50:50.In the intersectant region, there is 50-100% of separate color grains having min, diameter of 0.1 mm-0.8mm.

To make the products under the invention, The three-dimensional color pattern slabs formed by sintering ceramic powder, among color patterns of these two color areas and within 1-50mm intersectant region, the different color powders of adjacent different color pattern blocks are proportionally mixed up between 1:50 and 50:50.

To make the products under the invention, The three-dimensional color pattern slabs formed by sintering ceramic powder, The abovementioned pattern blocks contain 1-5 types of grains in 1.5mm- 20mm diameters that cover 2%-80% of the block.

To make the products under the invention, The three-dimensional color pattern slab has clear-cut pattern blocks formed by 2-10 different colors or an identical color but different from shade or diversified compound color. Covering 90%-100% of product thickness, three-dimensional space from the surface layer to bottom has biscuit-shape pattern formed by 1-5 types of ceramic color powders in 3mm-60mm diameters.

To make the products under the invention, The three-dimensional color pattern slabs formed by sintering ceramic powder, The color area in the three-dimensional color pattern slab may present single color such as red, yellow, white, blue, black, green, purple and brown etc. or the mixture of two or a great variety of color grains as well as the compound of mixed color and single color.

To make the products under the invention, The three-dimensional color pattern slabs formed by sintering ceramic powder, the silicate color blocks size from 40cm² like mosaic to 10m² like the huge marble slab, and the thickness from 3mm to 1000mm, and the different overall geometric shapes, including the shapes of plane plate, cylinder, arc plate, partially cylinder, ball, polygon, round, stripe or square.

To make the three-dimensional color pattern slabs under the invention, The product surface can be polished or non-polished.

To make the three-dimensional color pattern slabs under the invention, On the product surface, there is also better there-dimensional patterning formed by concave and convex anti-skid patterns in the depth of 0.1mm-5mm.The surface of the convex pattern can be polished or non-polished.

The method and fabrication process of three-dimensional color pattern slab formed by sintering ceramic powder under the invention are specified as follows:
(1) Separately fill brick red 1, white 2 and grey-black 3 granules constituting 50% of powder material into 3 vessels;
(2) Put collapsible die assembly 4 under the vessels. This die assembly is equipped with 3 color block openings and is shaped into certain pattern;
(3) According to Fig.4, enclose multicolor raw material to respective section;
(4) Run the steel die (6) on the plane at high speed to the front, the back, and the left and right (within the range of 1-20mm). The velocity of movement shall be 0.5-10 times of the falling speed of powder in order to form natural mixture in the interface of different color blocks and to truthfully resemble the three dimensional structure of stone pattern. In this way, the powder passes the opening of the collapsible die assembly 6 d fall into the stamping die frame of press.
(5) Accomplish the process with punch forming with press then drying and firing.

Thus, while the invention has been shown and described with reference to specific features, aspects and embodiments herein, it will be appreciated that the invention is susceptible of a wide variety of other embodiments, features and implementations consistent with the disclosure herein, and the invention is therefore to be broadly construed and interpreted, within the spirit and scope of the foregoing disclosure.

### Industrial Application

Present invention has further improved the structure of decorative natural stone imitation to achieve advantages such as lower water absorption, lower color aberration, smooth finish, and being free of radio element contamination etc, comparing with natural stone material. Practical machining operation in large quantity has cut down production cost and has created certain utility value of the industry.

## Claims

1. A kind of three-dimensional color pattern slabs formed by sintering ceramic powder which diameter within at least of 0.1mm-0.8mm, formed by press and sintering, with the features as:
The products have clear-cut ceramic pattern blocks formed by different colors or one color identical but different from shade or diversified compound color.
There are at least two pattern blocks with each area accounting for 10%-90% of the total area of the product, and each color block has at least one powder color accounting for 80%-100% of the block area and evenly distributed in 70%-100°/a of the product thickness from surface layer to base;
In addition, among color patterns of these two color areas and within 1-20mm intersectant region, the different color powders of adjacent different color pattern blocks are proportionally mixed up between 1:50 and 50:50.

2. A kind of three-dimensional color pattern slabs formed by sintering ceramic powder in claim 1, with the features as: there are at least two pattern blocks with each area accounting for 10%-90% of the total area of the product, and each color block has at least one powder color accounting for 85%-100% of the block area and evenly distributed in 80%-100% of the product thickness from surface layer to base.

3. A kind of three-dimensional color pattern slabs formed by sintering ceramic powder in claim 1, with the features as: among color patterns of these two color areas and within 1-20mm intersectant region, the different color powders of adjacent different color pattern blocks are proportionally mixed up between 1:50 and 50:50.In the intersectant region, there is 50-100% of separate color grains having min. diameter of 0.1 mm-0.8mm.

4. A kind of three-dimensional color pattern slabs formed by sintering ceramic powder in claim 1, with the features as: among color patterns of these two color areas and within 1-50mm intersectant region, the different color powders of adjacent different color pattern blocks are proportionally mixed up between 1:50 and 50:50.

5. A kind of three-dimensional color pattern slabs formed by sintering ceramic powder in claim 1, with the features as: The abovementioned pattern blocks contain 1-5 types of grains in 1.5mm- 20mm diameters that cover 2%-80% of the block.

6. A kind of three-dimensional color pattern slabs formed by sintering ceramic powder in claim 1, with the features as: among clear-cut pattern blocks formed by 2-10 different colors or an identical color but different from shade or diversified compound color. Covering 90%-100% of product thickness, three-dimensional space from the surface layer to bottom has biscuit-shape pattern formed by 1-5 types of ceramic color powders in 3mm-60mm diameters.

7. A kind of three-dimensional color pattern slabs formed by sintering ceramic powder in claim 1, with the features as: The color area in the three-dimensional color pattern slab may present single color such as red, yellow, white, blue, black, green, purple and brown etc. or the mixture of two or a great variety of color grains as well as the compound of mixed color and single color.

8. A kind of three-dimensional color pattern slabs formed by sintering ceramic powder in claim 1, with the features as: the silicate color blocks size from 40cm² like mosaic to 10m² like the huge marble slab, and the thickness from 3mm to 1000mm, and the different overall geometric shapes, including the shapes of plane plate, cylinder, arc plate, partially cylinder, ball, polygon, round, stripe or square.

9. A kind of three-dimensional color pattern slabs formed by sintering ceramic powder in claim 1, with the features as: The product surface can be polished or non-polished.

10. A kind of three-dimensional color pattern slabs formed by sintering ceramic powder in claim 1, with the features as: On the product surface, there is also better there-dimensional patterning formed by concave and convex anti-skid patterns in the depth of 0.1mm-5mm.The surface of the convex pattern can be polished or non-polished.
